# EUROPÄISCHE PATENTSCHRIFT

(11) **EP 2 253 948 B1**
(45) Veröffentlichungstag und Bekanntmachung des Hinweises auf die Patenterteilung: **09.01.2013**
(21) Anmeldenummer: 09006906.3
(22) Anmeldetag: 22.05.2009
(51) Int. Cl.: G01N 21/89, G01N 21/896

(54) **Vorrichtung und Verfahren zum optischen Untersuchen eines Gegenstandes**
Device and method for optical examination of an object
Dispositif et procédé d'examen optique d'un objet

(43) Veröffentlichungstag der Anmeldung: 24.11.2010
(73) Patentinhaber: Dr. Schenk GmbH Industriemesstechnik, 82152 Planegg/Martinsried (DE)
(72) Erfinder: Vetter, Erich, 81475 München (DE); Wilkens, Dr. Ludger, 81371 München (DE)
(74) Vertreter: Manitz, Finsterwald & Partner GbR

(56) Entgegenhaltungen:
- EP-A- 0 926 486
- EP-A- 1 477 793
- EP-A2- 0 979 795
- AT-A4- 505 671
- DE-A1- 19 813 072
- DE-A1- 19 813 073
- DE-A1- 19 930 154
- JP-A- 9 269 265
- US-A1- 2004 000 652
- US-A1- 2004 179 193

## Beschreibung

Die Erfindung betrifft eine Vorrichtung und ein Verfahren zum optischen Untersuchen eines Gegenstands.

Derartige Vorrichtungen sind grundsätzlich bekannt und dienen zum Detektieren von Fehlstellen in sowohl optisch transparenten Medien als auch Oberflächen- oder Schichtsystemen mit Reflexionseigenschaften. Als zu untersuchende Gegenstände kommen allgemein nicht nur endlose Bahnmaterialien, wie beispielsweise Glasbänder oder Kunststofffolien, sondern auch Stückgüter und Plattenmaterialien, z.B. Flachbildschirmfrontplatten, Papierblätter, Metallfolien, optische Linsen und Gläser, sowie Oberflächenmaterialien und Beschichtungen in Betracht, wie beispielsweise Verbundmaterialien, Folienschichtsysteme, Lackschichten und Sputterschichten auf Oberflächen.

Eine bekannte Vorrichtung der eingangs genannten Art umfasst eine Beleuchtung zum Ausleuchten eines Inspektionsbereichs eines zu untersuchenden Gegenstands, welche eine Lichtquelle und eine zwischen der Lichtquelle und dem Gegenstand angeordnete Blende aufweist, die für das Licht der Lichtquelle undurchlässig ist und eine Kante besitzt, welche eine Leuchtfläche der Beleuchtung in einen hellen und einen dunklen Bereich teilt.

Des Weiteren umfasst die bekannte Vorrichtung einen Sensor zum Erfassen der Intensität des von dem Gegenstand transmittierten Lichts der Beleuchtung, wobei der Sensor und die Kante der Blende derart miteinander ausgerichtet sind, dass die bei einem fehlerfreien Gegenstand durch den Sensor erfasste Lichtintensität geringer als die Maximalintensität ist, die ohne Blende gemessen würde. Mit anderen Worten ist der Sensor so ausgerichtet, dass der Sensor im Fall eines fehlerfreien Inspektionsbereichs gleichzeitig Ausschnitte des hellen und dunklen Bereichs der Leuchtfläche der Beleuchtung sieht. Eine sich durch das Sichtfeld des Sensors bewegende lichtablenkende Fehlstelle des Gegenstands wird durch den Sensor in Form einer sich ändernden Lichtintensität wahrgenommen.

Die bekannte Vorrichtung erweist sich insofern als nachteilig, als sich mit ihr lediglich lichtablenkende Fehlstellen detektieren bzw. Aussagen über die lichtablenkende Qualität einer Fehlstelle treffen lassen. Die Vorrichtung ermöglicht jedoch keine genauere Analyse der Natur einer Fehlstelle. Insbesondere ermöglicht sie keine Aussage darüber, ob eine lichtablenkende Fehlstelle zusätzlich eine abschattende Komponente besitzt, die beispielsweise durch einen Fremdkörper in dem zu untersuchenden Gegenstand verursacht wird. Zur Gewinnung dieser zusätzlichen Information bzw. zur Detektion reiner Kontrastfehler, die keine signifikante lichtablenkende Wirkung, sondern im Wesentlichen ausschließlich abschattende Eigenschaften besitzen, wäre eine entsprechende separate Detektionsvorrichtung erforderlich.

JP 09269265 A offenbart eine Vorrichtung zum optischen Untersuchen eines Gegenstands mit einer Beleuchtung, die zwei identische Lichtquellen umfasst, nämlich zwei Halogenlampen, die beide sichtbares Licht emittieren. Dabei ist der einen Lichtquelle ein Filter vorgelagert, welches lediglich infrarotes Licht mit einer Wellenlänge von etwa 2.800 nm durchlässt. Das von der einen Halogenlampe ausgestrahlte sichtbare Licht wird von einem ersten Fotodetektor erfasst, und das von der anderen Halogenlampe ausgestrahlte und gefilterte Infrarotlicht wird von einem zweiten Fotodetektor erfasst. Durch die räumliche Trennung der Halogenlampen einerseits und der Fotodetektoren andererseits sind auch die Strahlengänge des sichtbaren und infraroten Lichts räumlich voneinander beabstandet.

EP 0 926 486 A2 offenbart eine Vorrichtung zur optischen Inspektion transparenter Behälter. Die Vorrichtung umfasst eine Beleuchtung mit einer oder mehreren Lampen, die mit einem Diffusor zusammenwirken, um eine großflächige diffuse Lichtquelle zu bilden. Der Beleuchtung ist ein Polarisator vorgelagert. Gegenüber der Beleuchtung ist eine Kamera angeordnet, welche von der Beleuchtung ausgestrahltes sichtbares und infrarotes Licht erfasst. Der Kamera ist ein Polarisator vorgelagert, welcher relativ zu dem Polarisator der Beleuchtung um 90° verdreht ist. Die Polarisatoren wirken im sichtbaren Wellenlängenbereich und sind für das infrarote Licht der Beleuchtung durchlässig. Die Vorrichtung umfasst folglich einen polarisationsempfindlichen Detektionskanal im sichtbaren Wellenlängenbereich und einen polarisationsunempfindlichen Detektionskanal im infraroten Wellenlängenbereich.

DE 198 13 072 A1 offenbart eine Vorrichtung zur Detektion von Fehlern in einer Glasbahn mit einer Beleuchtung, die eine Lampe und zwei der Lampe vorgelagerte Filter umfasst, welche zwei unterschiedlich farbige Beleuchtungshälften bilden, z.B. eine rote und eine grüne Beleuchtungshälfte, die quer zu der Glasbahn verlaufen. Der Betrachtungsfleck einer Kamera befindet sich im fehlerfreien Zustand der Glasbahn ungefähr in der Mitte zwischen den beiden Beleuchtungshälften. Jeder Beleuchtungshälfte, d.h. also jeder Farbe, ist ein Videosignal zugeordnet. Bei fehlerfreiem Glas sind die beiden Videosignale in ihrer Intensität nahezu gleich. Fehler im Glas verschieben dagegen den Betrachtungsfleck, wodurch das eine Videosignal stärker und das andere schwächer wird. Diese Veränderung der Intensität der Videosignale wird zur Beurteilung der Qualität des Glases herangezogen.

Der Erfindung liegt die Aufgabe zugrunde, eine Vorrichtung zum optischen Untersuchen eines Gegenstands zu schaffen, die bei einer besonders einfachen und kostengünstigen Konstruktion eine gleichzeitige Detektion von lichtablenkenden Fehlern und Kontrastfehlern in dem zu untersuchenden Gegenstand ermöglicht.

Zur Lösung der Aufgabe sind eine Vorrichtung mit den Merkmalen des Anspruchs 1 und ein Verfahren mit den Merkmalen des Anspruchs 12 vorgesehen.

Konkret umfasst die erfindungsgemäße Vorrichtung eine Beleuchtung zum Ausleuchten eines Inspektionsbereichs des Gegenstands, welche eine erste Lichtquelle zur Emission einer ersten Art von Licht und eine zweite Lichtquelle zur Emission einer zweiten Art von Licht aufweist sowie eine zwischen den Lichtquellen und dem Gegenstand angeordnete Blende, welche für die erste Art von Licht undurchlässig ist und eine Kante aufweist, die eine Leuchtfläche der Beleuchtung bezüglich der ersten Art von Licht in einen hellen und einen dunklen Bereich teilt, und welche für die zweite Art von Licht durchlässig ist, so dass beide Bereiche bezüglich der zweiten Art von Licht hell erscheinen. Ferner umfasst die Vorrichtung einen für beide Arten von Licht empfindlichen Sensor zum Erfassen der Intensität des von dem Gegenstand transmittierten oder reflektierten Lichts der Beleuchtung. Die Beleuchtung umfasst mehrere erste Leuchtdioden, die Licht der ersten Art emittieren, und mehrere zweite Leuchtdioden, die Licht der zweiten Art emittieren, wobei eine Reihe von Leuchtdioden, welche die ersten Leuchtdioden umfasst, in einer Ebene verläuft, die durch den Sensor und die Kante der Blende definiert wird. Die Beleuchtung, der Sensor und die Kante der Blende sind folglich derart miteinander ausgerichtet, dass die bei einem fehlerfreien Inspektionsbereich von dem Sensor erfasste Intensität der ersten Art von Licht etwa 50 % der Intensität entspricht, die ohne Blende gemessen würde.

Der Erfindung liegt der allgemeine Gedanke zugrunde, die Anordnungen zur Detektion eines lichtablenkenden Fehlers einerseits und zur Detektion eines Kontrastfehlers andererseits in eine Vorrichtung zu integrieren, indem mit zwei verschiedenen Arten von Licht gearbeitet wird und die Blende so an das verwendete Licht angepasst wird, dass sie für das Licht der ersten Art undurchlässig und für das Licht der zweiten Art durchlässig ist.

Das Licht der ersten Art, dessen Strahlengang durch die Blende beeinflussbar ist, bildet folglich einen für die Detektion lichtablenkender Fehler vorgesehenen ersten Kanal, der nachfolgend auch als "ablenkender Kanal" bezeichnet wird, während das durch die Blende nicht beeinflussbare Licht der zweiten Art einen zweiten Kanal bildet, nachfolgend "diffuser Kanal" genannt, der eine Detektion von Kontrastfehlern ermöglicht.

Auf diese Weise lassen sich auf einfache und kostengünstige Weise mittels einer einzigen Vorrichtung und insbesondere mittels einer einzigen Beleuchtung und eines einzigen Sensors zwei verschiedene Typen von Fehlern in einem zu untersuchenden Gegenstand detektieren und identifizieren.

Ist die Vorrichtung für eine Detektion in Transmission ausgelegt, d.h. befinden sich die Beleuchtung und der Sensor auf unterschiedlichen Seiten des zu untersuchenden Gegenstands, so wird durch die Ausrichtung der Reihe von Leuchtdioden, welche die ersten Leuchtdioden umfasst, in einer Ebene mit dem Sensor und der Kante der Blende durch einen besonders einfachen Strahlengang sichergestellt, dass die bei einem fehlerfreien Inspektionsbereich durch den Sensor erfasste Lichtintensität etwa 50 % der maximal erfassbaren Lichtintensität beträgt.

Leuchtdioden stellen besonders kostengünstige Leuchtmittel dar, die sich nicht nur durch einen minimalen Energieverbrauch auszeichnen, sondern die sich auch sehr schnell und verschleißfrei ein- und ausschalten lassen. Darüber hinaus sind Licht unterschiedlicher Wellenlänge emittierende Leuchtdioden erhältlich, so dass sich durch eine geeignete Auswahl von Leuchtdioden auf einfache Weise erste und zweite Lichtquellen bilden lassen.

Vorteilhafte Ausbildungen der Erfindung sind den Unteransprüchen, der Beschreibung und der Zeichnung zu entnehmen.

Bevorzugt sind die ersten und zweiten Leuchtdioden in einer Reihe angeordnet, da dies eine einfache Ausrichtung der Lichtquellen mit der Kante der Blende ermöglicht. Durch eine abwechselnde Anordnung der ersten und zweiten Leuchtdioden in einer Reihe wird außerdem eine gleichmäßige Ausleuchtung des Inspektionsbereichs mit Licht sowohl der ersten Art als auch der zweiten Art erreicht.

Alternativ zu einer Anordnung der ersten und zweiten Leuchtdioden in einer einzigen Reihe können die ersten Leuchtdioden in einer ersten Reihe und die zweiten Leuchtdioden in einer zweiten Reihe angeordnet sein, welche sich insbesondere parallel zu der ersten Reihe erstreckt.

Die Ausrichtung beider Reihen von Leuchtdioden parallel zu der Kante der Blende trägt zu einer gleichmäßigen Ausleuchtung des Inspektionsbereichs bei.

Gemäß einer weiteren Ausführungsform umfasst die Beleuchtung einen Diffusor, welcher in vorteilhafter Weise verhindert, dass der auf den zu untersuchenden Gegenstand, genauer gesagt auf eine Inspektionsebene, fokussierte Sensor die einzelnen Leuchtdioden erkennen kann. Der Diffusor trägt somit ebenfalls zu einer homogenen Ausleuchtung des Inspektionsbereichs bei.

Gemäß einer besonders einfachen baulichen Ausgestaltung ist die Blende mit dem Diffusor verbunden und insbesondere an einer den Lichtquellen abgewandten Seite des Diffusors an diesem angebracht.

Der Sensor kann wenigstens eine Zeile von Sensorelementen umfassen, die bevorzugt parallel zu der Kante der Blende ausgerichtet ist. Ein derartiger Sensor eignet sich besonders gut für Inspektionsaufgaben, bei denen der zu untersuchende Gegenstand, beispielsweise ein endloses Bahnmaterial, wie z.B. ein Glasband, kontinuierlich durch die Vorrichtung hindurch bewegt oder an dieser vorbeigeführt wird, der zu untersuchende Gegenstand mit anderen Worten also kontinuierlich abgescannt wird.

Gemäß einer bevorzugten Ausführungsform umfasst der Sensor eine Zeile von Sensorelementen, die auf beide Arten von Licht ansprechen. In einem einfachen Fall kann es sich bei dem Sensor beispielsweise um eine Zeilenkamera handeln, die leicht verfügbar und kostengünstig ist.

Wird eine Zeilenkamera als Sensor verwendet, d.h. sprechen die Sensorelemente des Sensors gleichermaßen auf das Licht der ersten und zweiten Art an, so muss zur Unterscheidung zwischen dem ablenkenden Kanal und dem diffusen Kanal zwischen dem Licht der ersten Art und dem Licht der zweiten Art hin- und hergeschaltet werden. Hierzu ist vorteilhafterweise eine Steuerung vorgesehen, welche die erste Lichtquelle und die zweite Lichtquelle abwechselnd ein- bzw. ausschaltet und synchronisiert mit der Schaltung der Lichtquellen das Auslesen der Signale des Sensors steuert. Je höher die Frequenz ist, mit der die Lichtquellen ein- und ausgeschaltet werden, desto höher ist die in der Bewegungsrichtung des zu untersuchenden Gegenstands erreichbare Ortsauflösung der Detektion.

Anstelle einer abwechselnden Aktivierung der ersten und zweiten Lichtquelle ist es grundsätzlich auch möglich, die erste und zweite Lichtquelle jeweils kontinuierlich zu betreiben, d.h. den Inspektionsbereich gleichzeitig mit beiden Lichtarten auszuleuchten. In diesem Fall muss der Sensor die erste Lichtart von der zweiten Lichtart unterscheiden können und eine Steuerung vorgesehen sein, um wahlweise und insbesondere abwechselnd den ablenkenden Kanal und den diffusen Kanal des Sensors auszulesen.

Ein hierfür geeigneter Sensor kann eine erste Zeile von Sensorelementen, die auf die erste Lichtart ansprechen, und eine zweite Zeile von Sensorelementen umfassen, die auf die zweite Lichtart ansprechen. In einem einfachen Fall kann es sich bei einem derartigen Sensor um eine Zweizeilen-Farbkamera handeln. Generell kommen aber auch andere Typen von Farbkameras in Betracht, wie z.B. Matrixkameras.

Gemäß einer besonders einfachen und kostengünstigen Ausbildung der Erfindung unterscheidet sich das Licht der ersten Art in seiner Wellenlänge von dem Licht der zweiten Art, d.h. die erste Lichtquelle emittiert Licht einer ersten Farbe und die zweite Lichtquelle emittiert Licht einer zweiten Farbe. Alternativ oder zusätzlich zu der Wellenlänge bzw. der Farbe ist grundsätzlich aber auch die Polarisation des Lichts als Unterscheidungskriterium denkbar. In letzterem Fall würde also das Licht der ersten Art eine andere Polarisation aufweisen als das Licht der zweiten Art.

Weiterer Gegenstand der Erfindung ist außerdem ein Verfahren mit den Merkmalen des Anspruchs 12, durch welches sich die voranstehend genannten Vorteile entsprechend erreichen lassen.

Nachfolgend wird die Erfindung rein beispielhaft anhand einer vorteilhaften Ausführungsform unter Bezugnahme auf die beigefügte Zeichnung beschrieben. Es zeigen:
- Fig. 1: eine schematische Ansicht eines bevorzugten Ausführungsbeispiels der erfindungsgemäßen Vorrichtung;
- Fig. 2: das Prinzip der Detektion eines lichtablenkenden Feh- lers mittels der Vorrichtung von Fig. 1;
- Fig. 3: ein Graubild eines gemäß dem Prinzip von Fig. 2 auf- genommenen lichtablenkenden Fehlers;
- Fig. 4: das Prinzip der Detektion eines Kontrastfehlers mittels der Vorrichtung von Fig. 1; und
- Fig. 5: ein Graubild eines gemäß dem Prinzip von Fig. 4 auf- genommenen Kontrastfehlers.

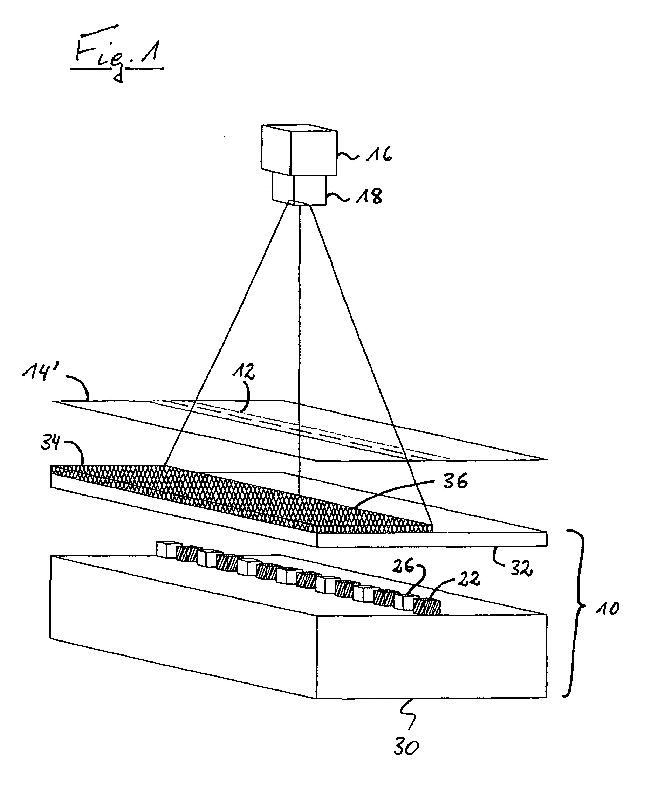

In Fig. 1 ist ein bevorzugtes Ausführungsbeispiel der erfindungsgemäßen Vorrichtung schematisch dargestellt. Die Vorrichtung umfasst eine Beleuchtung 10 zum Ausleuchten eines streifenförmigen Inspektionsbereichs 12 eines zu untersuchenden Gegenstands 14, angedeutet durch die Inspektionsebene 14', und eine Kamera 16 mit zugeordnetem Objektiv 18 zur Beobachtung des Inspektionsbereichs 12.

Im vorliegenden Ausführungsbeispiel handelt es sich bei dem zu untersuchenden Gegenstand 14 um einen transparenten Gegenstand, wie beispielsweise ein Glasband oder eine Kunststofffolie. Die Transparenz des Gegenstands 14 ermöglicht es, den Gegenstand 14 in Transmission zu untersuchen, d.h. die Beleuchtung 10 und die Kamera 16 auf unterschiedlichen Seiten des Gegenstands 14 anzuordnen. Im vorliegenden Ausführungsbeispiel ist die Beleuchtung 10 unterhalb des Gegenstands 14 und die Kamera 16 oberhalb desselben angeordnet.

Grundsätzlich ist es aber auch möglich, einen Gegenstand 14 in Reflexion zu untersuchen. Die Beleuchtung 10 und die Kamera 16 sind in diesem Fall auf einer Seite des zu untersuchenden Gegenstands 14 angeordnet. Eine derartige Reflexionsanordnung eignet sich insbesondere für eine Inspektion eines nicht transparenten Gegenstands 14.

Mittels eines in den Figuren nicht dargestellten Fördermittels wird der Gegenstand 14 in einer Richtung 20 quer zum Inspektionsbereich 12 durch die Vorrichtung hindurchbewegt.

Die Beleuchtung 10 umfasst eine Vielzahl von ersten Leuchtdioden 22, die Licht 24 einer ersten Wellenlänge emittieren, und eine Vielzahl von zweiten Leuchtdioden 26, die Licht 28 einer zweiten Wellenlänge emittieren. Die ersten und zweiten Leuchtdioden 22, 26 sind auf einem Träger 30 abwechselnd in einer Reihe angeordnet, die parallel zu dem Inspektionsbereich 12 verläuft.

Die Beleuchtung 10 umfasst ferner einen zwischen den Leuchtdioden 22, 26 und dem zu untersuchenden Gegenstand 14 angeordneten Diffusor 32. In Verbindung mit einer Fokussierung des Kameraobjektivs 18 auf die Inspektionsebene 14' stellt der Diffusor 32 sicher, dass die Kamera 16 nicht die einzelnen Leuchtdioden 22, 26 erkennt, sondern den Inspektionsbereich 12 - sofern der Gegenstand 14 in diesem Bereich keinen detektierbaren Fehler aufweist - als homogen ausgeleuchtet wahrnimmt.

An der den Leuchtdioden 22, 26 abgewandten Seite des Diffusors 32 ist eine Blende 34 angebracht, die für das Licht 24 der ersten Leuchtdioden 22 undurchlässig und für das Licht 28 der zweiten Leuchtdioden 26 durchlässig ist. Die Blende 34 weist eine Kante 36 auf, welche den Diffusor 32 bezüglich des Lichts 24 der ersten Leuchtdioden 22 in einen hellen Bereich 38 und einen Bereich 40 teilt. Da die Blende 34 für das Licht 28 der zweiten Leuchtdioden 26 durchlässig ist, erscheinen die Diffusorbereiche 38, 40 für das Licht 28 der zweiten Leuchtdioden 26 beide hell.

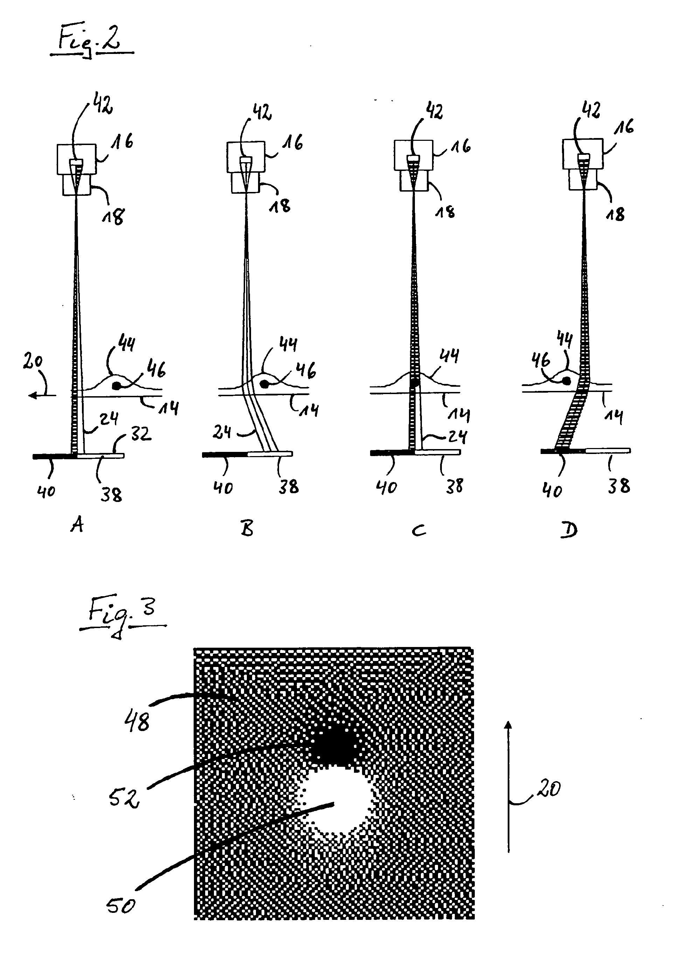

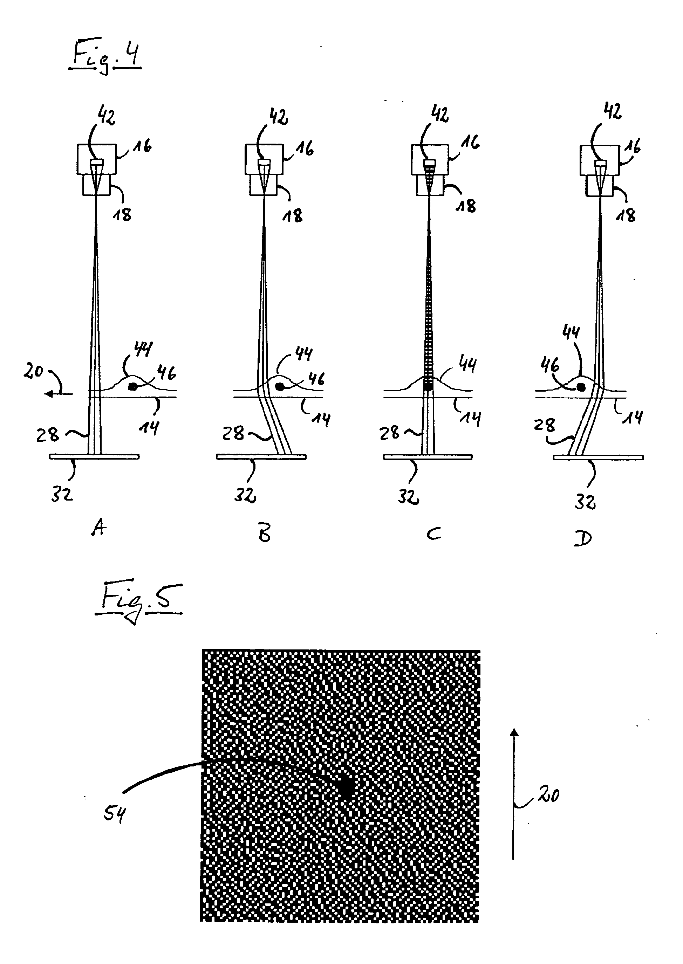

Bei der Kamera 16 handelt es sich um eine Einzeilenkamera, d.h. die Kamera 16 weist eine Reihe von nebeneinander angeordneten Sensorelementen 42 auf (Fig. 2 und 4). Die Reihe von Sensorelementen 42 ist parallel zu der Kante 36 der Blende 34 und der Reihe der Leuchtdioden 22, 26 ausgerichtet. Bei der hier dargestellten Ausführungsform liegen die Reihe der Sensorelemente 42, die Kante 36 der Blende 34 und die Reihe der Leuchtdioden 22, 26 in einer Ebene.

Ferner sind die Kamera 16 und das Objektiv 18 so ausgerichtet, dass sich die Kante 36 der Blende 34 etwa mittig entlang des Inspektionsbereichs 12 erstreckt. Hierdurch wird erreicht, dass die durch die Kamera 16 erfasste Intensität des von den ersten Leuchtdioden 22 emittierten Lichts 24, welches von der Blende 34 nicht durchgelassen wird, dann, wenn sich kein detektierbarer Fehler in dem Inspektionsbereich 12 befindet, etwa nur der Hälfte des maximal möglichen Intensitätswerts entspricht, d.h. also etwa 50 % der Lichtintensität, die erfasst würde, wenn die Blende 34 nicht vorhanden wäre und somit nicht die Hälfte des Lichts 24 durch die Blende 34 abgeschattet würde.

Wie bereits erwähnt, wird das von den zweiten Leuchtdioden 26 emittierte Licht 28 von der Blende 34 durchgelassen, d.h. die von der Kamera 16 erfasste Intensität des Lichts 28 der zweiten Wellenlänge wird durch die Blende 34 nicht beeinflusst.

Die ersten und zweiten Leuchtdioden 22, 26 werden abwechselnd ein- und ausgeschaltet, so dass der Inspektionsbereich 12 abwechselnd mit Licht 24 der ersten Wellenlänge und Licht 28 der zweiten Wellenlänge ausgeleuchtet wird. Entsprechend empfängt auch die Kamera 16 abwechselnd Licht 24 der ersten Wellenlänge und Licht 28 der zweiten Wellenlänge.

Das Auslesen der von der Kamera 16 gelieferten Lichtintensitätssignale geschieht synchronisiert mit der Schaltung der Leuchtdioden 22, 26, d.h. es werden abwechselnd die der erfassten Intensität des Lichts 24 der ersten Wellenlänge entsprechenden Signale, d.h. der ablenkende Kanal, und die der Intensität des Lichts 28 der zweiten Wellenlänge entsprechenden Signale, d.h. der diffuse Kanal, ausgelesen.

Anhand von Fig. 2 wird nachfolgend die Detektion eines lichtablenkenden Fehlers im ablenkenden Kanal, d.h. mit Hilfe des Lichts 24 der ersten Wellenlänge, erläutert. Bei dem lichtablenkenden Fehler handelt es sich hier um eine konvexe Oberflächendeformation 44, d.h. also eine lokale Erhöhung der Oberfläche des zu untersuchenden Gegenstands 14, die durch einen in den Gegenstand 14 eingelagerten Fremdkörper 46 verursacht wird.

Wie bereits erwähnt, wird der zu untersuchende Gegenstand 14 in einer Richtung 20 durch die Vorrichtung hindurchbewegt, in Fig. 2 von rechts nach links.

In Fig. 2A ist eine Situation dargestellt, in welcher ein fehlerfreier Inspektionsbereich 12 des Gegenstands 14 inspiziert wird, d.h. das durch die Kamera 16 erfasste Licht 24 durchläuft den zu untersuchenden Gegenstand 14 im Wesentlichen ungestört. Bei diesem "ungestörten" Strahlengang wird etwa die Hälfte des von den ersten Leuchtdioden 22 ausgestrahlten Lichts 24 durch die Blende 34 abgeschattet, so dass die Kamera 16 eine Lichtintensität erfasst, die etwa 50 % des Maximalwerts entspricht.

In Fig. 2B tritt die Oberflächendeformation 44 in den Strahlengang des Lichts 24 ein, wodurch der Strahlengang so abgelenkt wird, dass das Licht 24 nicht mehr durch die Blende 34 abgeschattet wird. Die Kamera 16 sieht mit anderen Worten ausschließlich den hellen Bereich 38 des Diffusors 32 und erfasst somit die maximal mögliche Lichtintensität.

Die weitere Bewegung des Gegenstands 14 führt dazu, dass der Fremdkörper 46 in den Strahlengang des Lichts 24 eintritt und diesen abschattet (Fig. 2C). Die Kamera 16 erfasst in dieser Situation eine minimale Lichtintensität, die zumindest annähernd 0 % des Maximalwerts erreichen kann.

Hiernach bewegt sich der Fremdkörper 46 wieder aus dem Strahlengang des Lichts 24 heraus (Fig. 2D). Durch die Oberflächendeformation 44 wird der Strahlengang des durch die Kamera 16 empfangenen Lichts jetzt so abgelenkt, dass die Kamera 16 ausschließlich die Blende 34 und somit den dunklen Bereich 40 der Beleuchtung sieht. In dieser Situation erfasst die Kamera 16 folglich immer noch eine minimale Lichtintensität, die bis zu 0 % des Maximalwerts betragen kann.

Erst wenn die Oberflächendeformation 44 den Strahlengang vollständig verlassen hat, stellt sich wieder die in Fig. 2A gezeigte Situation ein, in welcher die Kamera 16 etwa 50 % der maximal möglichen Lichtintensität empfängt.

Die von der Kamera 16 über die Breite des Inspektionsbereichs 12 erfassten Lichtintensitätswerte werden in einer mit der Kamera 16 verbundenen Auswerteeinheit zu einem Graubild zusammengesetzt. Das Graubild der im ablenkenden Kanal aufgenommenen Oberflächendeformation 44 ist in Fig. 3 dargestellt.

Der überwiegende Bereich 48 des Graubilds weist einen mittleren Grauwert auf, welcher einer 50 %-igen Lichtintensität entspricht und somit den fehlerfreien Bereich des Gegenstands 14 repräsentiert. Des Weiteren umfasst das Graubild einen weißen Bereich 50, in welchem die erfasste Lichtintensität dem Maximalwert entspricht, und einen schwarzen Bereich 52, in welchem die erfasste Lichtintensität ihren Minimalwert erreicht. Die in der Bewegungsrichtung 20 gesehen aufeinander folgenden weißen und schwarzen Bereiche 50, 52 stellen ein Abbild der detektierten Oberflächendeformation 44 dar. Anhand der Lage und Ausmaße der weißen und schwarzen Bereiche 50, 52 in dem Graubild lassen sich entsprechende Rückschlüsse auf die Lage, Form und Ausdehnung der detektierten Oberflächendeformation 44 in dem zu untersuchenden Gegenstand 14 ziehen.

Wie bereits erwähnt, wird regelmäßig zwischen den ersten Leuchtdioden 22 und den zweiten Leuchtdioden 26 hin- und hergeschaltet. Dies ermöglicht es, nicht nur die Oberflächendeformation 44 an sich zu detektieren, sondern gleichzeitig auch die Ursache hierfür zu identifizieren, nämlich den Fremdkörper 46, wie nachfolgend anhand von Fig. 4 erläutert wird.

Sobald die zweiten Leuchtdioden 26 eingeschaltet sind, arbeitet die Vorrichtung auf dem diffusen Kanal, d.h. mit dem Licht 28 der zweiten Wellenlänge, welches durch die Blende 34 nicht beeinflusst wird.

In Fig. 3A ist eine Situation dargestellt, in welcher die Kamera 16 einen fehlerfreien Inspektionsbereich 12 erfasst, das Licht 28 den zu untersuchenden Gegenstand 14 also im Wesentlichen ungestört durchquert. Die Kamera 16 empfängt in dieser Situation eine maximale Lichtintensität. Tritt die Oberflächendeformation 44 in den Strahlengang des Lichts 28 ein, so wird das Licht 28 zwar abgelenkt, die Kamera 16 empfängt aber immer noch die maximale Lichtintensität (Fig. 2B). Erst wenn der Fremdkörper 46 in den Strahlengang eintritt, wird das Licht 28 abgeschattet, und die Kamera 16 empfängt eine minimale Lichtintensität, die - je nach Größe des Fremdkörpers 46 - bis zu 0 % der maximal möglichen Lichtintensität erreichen kann (Fig. 4C).

Wenn der Fremdkörper 46 aus dem Strahlengang austritt, kann das Licht 28 die Kamera 16 wieder erreichen. In der in Fig. 4D gezeigten Situation wird das Licht 28 zwar immer noch durch die Oberflächendeformation 44 abgelenkt, die Kamera 16 empfängt aber wieder die maximale Lichtintensität, da das Licht 28 der zweiten Wellenlänge - anders als das Licht 24 der ersten Wellenlänge - die Blende 34 ungehindert passieren kann.

Ähnlich wie bei der Detektion im ablenkenden Kanal werden auch bei der Detektion im diffusen Kanal die von der Kamera 16 gelieferten Lichtintensitätswerte durch die Auswerteeinheit zu einem Graubild zusammengesetzt.

Ein Graubild des mit dem diffusen Kanal aufgenommenen Fremdkörpers 46 ist in Fig. 5 dargestellt. Der Fremdkörper 46 als Kontrastfehler erscheint in diesem Graubild schwarz, gewissermaßen also als Schatten 54. Der übrige in dem Graubild dargestellte Bereich des untersuchten Gegenstands 14 ist fehlerfrei und deshalb in einem Grauwert dargestellt, welcher der durch die Kamera 16 maximal erfassbaren Intensität des Lichts 28 entspricht.

Die Lage, Form und Ausdehnung des den Fremdkörper 46 repräsentierenden Schattens in dem Graubild erlaubt einen Rückschluss auf die Lage, die Form und die Größe des Fremdkörpers 46 in dem zu untersuchenden Gegenstand 14 und ermöglicht dadurch gegebenenfalls eine Aussage über die Art und Beschaffenheit des Fremdkörpers 46.

Im Ergebnis ist insbesondere durch eine Zusammenschau der mit dem ablenkenden Kanal und dem diffusen Kanal aufgenommenen Graubilder eine detailliertere Analyse und zuverlässigere Identifikation detektierter Fehlstellen in einem zu untersuchenden Gegenstand 14 möglich.

### Bezugszeichenliste

- 10: Beleuchtung
- 12: Inspektionsbereich
- 14: Gegenstand
- 14': Inspektionsebene
- 16: Kamera
- 18: Objektiv
- 20: Bewegungsrichtung
- 22: erste Leuchtdiode
- 24: Licht
- 26: zweite Leuchtdiode
- 28: Licht
- 30: Träger
- 32: Diffusor
- 34: Blende
- 36: Kante
- 38: heller Bereich
- 40: dunkler Bereich
- 42: Sensorelement
- 44: Oberflächendeformation
- 46: Fremdkörper
- 48: mittelgrauer Bereich
- 50: weißer Bereich
- 52: schwarzer Bereich
- 54: Schatten

## Patentansprüche

1. Vorrichtung zum optischen Untersuchen eines Gegenstands (14), umfassend
eine Beleuchtung (10) zum Ausleuchten eines Inspektionsbereichs (12) des Gegenstands (14), welche eine erste Lichtquelle (22) zur Emission einer ersten Art von Licht (24) und eine zweite Lichtquelle (26) zur Emission einer zweiten Art von Licht (28) aufweist sowie eine zwischen den Lichtquellen (22, 26) und dem Gegenstand (14) angeordnete Blende (34), welche für die erste Art von Licht (24) undurchlässig ist und eine Kante (36) aufweist, die eine Leuchtfläche der Beleuchtung (10) bezüglich der ersten Art von Licht (24) in einen hellen und einen dunklen Bereich (38, 40) teilt, und welche für die zweite Art von Licht (28) durchlässig ist, so dass beide Bereiche (38, 40) bezüglich der zweiten Art von Licht (28) hell erscheinen, und
einen für beide Arten von Licht (24, 28) empfindlichen Sensor (16) zum Erfassen der Intensität des von dem Gegenstand (14) transmittierten oder reflektierten Lichts (24, 28) der Beleuchtung (10),
wobei die Beleuchtung (10) mehrere erste Leuchtdioden (22), die Licht (24) der ersten Art emittieren, und mehrere zweite Leuchtdioden (26) umfasst, die Licht (28) der zweiten Art emittieren, und
wobei eine Reihe von Leuchtdioden, welche die ersten Leuchtdioden (22) umfasst, in einer Ebene verläuft, die durch den Sensor (16) und die Kante (36) der Blende (34) definiert wird.

2. Vorrichtung nach Anspruch 1,
**dadurch gekennzeichnet, dass**
die ersten und zweiten Leuchtdioden (22, 26), insbesondere abwechselnd, in einer Reihe angeordnet sind.

3. Vorrichtung nach Anspruch 1,
**dadurch gekennzeichnet, dass**
die ersten Leuchtdioden (22) in einer ersten Reihe angeordnet sind und die zweiten Leuchtdioden (26) in einer zweiten Reihe angeordnet sind, welche sich insbesondere parallel zu der ersten Reihe erstreckt.

4. Vorrichtung nach Anspruch 3,
**dadurch gekennzeichnet, dass**
beide Reihen von Leuchtdioden (22, 26) parallel zu der Kante (36) der Blende (34) ausgerichtet sind.

5. Vorrichtung nach einem der vorstehenden Ansprüche,
**dadurch gekennzeichnet, dass**
die Beleuchtung (10) einen Diffusor (32) umfasst, wobei die Blende (34) bevorzugt mit dem Diffusor (32) verbunden und insbesondere an einer den Lichtquellen (22, 26) abgewandten Seite des Diffusors (32) an diesem angebracht ist.

6. Vorrichtung nach einem der vorstehenden Ansprüche,
**dadurch gekennzeichnet, dass**
der Sensor (16) wenigstens eine Zeile von Sensorelementen (42) umfasst, die bevorzugt parallel zu der Kante (36) der Blende (34) ausgerichtet ist.

7. Vorrichtung nach einem der vorstehenden Ansprüche,
**dadurch gekennzeichnet, dass**
der Sensor (16) eine Zeile von Sensorelementen (42) umfasst, die auf beide Arten von Licht (24, 28) ansprechen.

8. Vorrichtung nach einem der vorstehenden Ansprüche,
**dadurch gekennzeichnet, dass**
eine Steuerung vorgesehen ist, um die erste Lichtquelle (22) und die zweite Lichtquelle (26) abwechselnd ein- bzw. auszuschalten und synchronisiert mit der Schaltung der Lichtquellen (22, 26) die Signale des Sensors (16) auszulesen.

9. Vorrichtung nach einem der Ansprüche 1 bis 7,
**dadurch gekennzeichnet, dass**
die erste und zweite Lichtquelle (22, 26) für einen kontinuierlichen Betrieb vorgesehen sind, der Sensor (16) die erste Art von Licht (24) von der zweiten Art von Licht (28) unterscheiden kann und eine Steuerung vorgesehen ist, um den Sensor (16) wahlweise und insbesondere abwechselnd auf einem der ersten Art von Licht (24) entsprechenden ersten Kanal und einem der zweiten Art von Licht (28) entsprechenden zweiten Kanal auszulesen.

10. Vorrichtung nach zumindest einem der vorstehenden Ansprüche,
**dadurch gekennzeichnet, dass**
der Sensor (16) eine erste Zeile von Sensorelementen, die auf die erste Lichtart ansprechen, und eine zweite Zeile von Sensorelementen umfasst, die auf die zweite Lichtart ansprechen.

11. Vorrichtung nach zumindest einem der vorstehenden Ansprüche,
**dadurch gekennzeichnet, dass**
das Licht (24) der ersten Art und das Licht (28) der zweiten Art unterschiedliche Wellenlängen und/oder unterschiedliche Polarisationen aufweisen.

12. Verfahren zum optischen Untersuchen eines Gegenstands (14), bei dem
ein Inspektionsbereich (12) des Gegenstands (14) mittels einer Beleuchtung (10) ausgeleuchtet wird, die eine erste Lichtquelle (22) zur Emission einer ersten Art von Licht (24) und eine zweite Lichtquelle (26) zur Emission einer zweiten Art von Licht (28) aufweist, und
die Intensität des von dem Gegenstand transmittierten oder reflektierten Lichts der Beleuchtung (10) mittels eines für beide Arten von Licht (24, 28) empfindlichen Sensor (16) erfasst wird,
wobei die Beleuchtung (10) eine zwischen den Lichtquellen (22, 26) und dem Gegenstand (14) angeordnete Blende (34) umfasst, welche für die erste Art von Licht (24) undurchlässig ist und eine Kante (36) aufweist, die eine Leuchtfläche der Beleuchtung (10) bezüglich der ersten Art von Licht (24) in einen hellen und einen dunklen Bereich (38, 40) teilt, und welche für die zweite Art von Licht (28) durchlässig ist, so dass beide Bereiche (38, 40) bezüglich der zweiten Art von Licht (28) hell erscheinen,
wobei die Beleuchtung (10) mehrere erste Leuchtdioden (22), die Licht (24) der ersten Art emittieren, und mehrere zweite Leuchtdioden (26) umfasst, die Licht (28) der zweiten Art emittieren, und
wobei eine Reihe von Leuchtdioden, welche die ersten Leuchtdioden (22) umfasst, in einer Ebene verläuft, die durch den Sensor (16) und die Kante (36) der Blende (34) definiert wird.

## Claims

1. An apparatus for the optical examination of an article (14) comprising
an illumination system (10) for illuminating an inspection region (12) of the article (14), which has a first light source (22) for emitting a first kind of light (24) and a second light source (26) for emitting a second kind of light (28), as well as an aperture (34) which is arranged between the light sources (22, 26) and the article (14), which is non-permeable for the first kind of light (24) and which has an edge (36) which divides an illumination surface of the illumination system (10) with respect to the first kind of light (24) into a bright region and a dark region (38, 40) and which is permeable for the second kind of light (28) so that both regions (38, 40) appear bright with respect to the second kind of light (28); and
a sensor (16) sensitive for both kinds of light (24, 28) for detecting the intensity of the light (24, 28) of the illumination system (10) transmitted or reflected by the article (14),
wherein the illumination system (10) includes a plurality of first light emitting diodes (22) which emit light (24) of the first kind and a plurality of second light emitting diodes (26) which emit light (28) of the second kind; and
wherein a row of light emitting diodes which includes the first light emitting diodes (22) extends in a plane which is defined by the sensor (16) and the edge (36) of the aperture (34).

2. An apparatus in accordance with claim 1,
**characterised in that**
the first and second light emitting diodes (22, 26) are arranged in a row, in particular alternately.

3. An apparatus in accordance with claim 1,
**characterised in that**
the first light emitting diodes (22) are arranged in a first row and the second light emitting diodes (26) are arranged in a second row which in particular extends in parallel to the first row.

4. An apparatus in accordance with claim 3,
**characterised in that**
both rows of light emitting diodes (22, 26) are aligned in parallel to the edge (36) of the aperture (34).

5. An apparatus in accordance with any one of the preceding claims,
**characterised in that**
the illumination system (10) includes a diffuser (32), with the aperture (34) preferably being connected to the diffuser (32) and in particular being attached to a side of the diffuser (32) remote from the light sources (22, 26).

6. An apparatus in accordance with any one of the preceding claims,
**characterised in that**
the sensor (16) includes at least one line of sensor elements (42) which is preferably aligned in parallel to the edge (36) of the aperture (34).

7. An apparatus in accordance with any one of the preceding claims,
**characterised in that**
the sensor (16) includes a line of sensor elements (42) which respond to the two kinds of light (24, 28).

8. An apparatus in accordance with any one of the preceding claims,
**characterised in that**
a control is provided to switch the first light source (22) and the second light source (26) on and off alternately and to read out the signals of the sensor (16) in synchronisation with the switching of the light sources (22, 26).

9. An apparatus in accordance with any one of the claims 1 to 7,
**characterised in that**
the first and second light sources (22, 26) are provided for a continuous operation, the sensor (16) can distinguish the first kind of light (24) from the second kind of light (28) and a control is provided to read out the sensor (16) selectively and in particular alternately on a first channel corresponding to the first kind of light (24) and a second channel corresponding to the second kind of light (28).

10. An apparatus in accordance with at least one of the preceding claims,
**characterised in that**
the sensor (16) includes a first line of sensor elements which respond to the first kind of light and a second line of sensor elements which respond to the second kind of light.

11. An apparatus in accordance with at least one of the preceding claims,
**characterised in that**
the light (24) of the first kind and the light (28) of the second kind have different wavelengths and/or different polarisations.

12. A method for the optical examination of an article (14), wherein
an inspection region (12) of the article (14) is illuminated by means of an illumination system (10) which has a first light source (22) for emitting a first kind of light (24) and a second light source (26) for emitting a second kind of light (28); and
the intensity of the light of the illumination system (10) transmitted or reflected by the article is detected by means of a sensor (16) sensitive for both kinds of light (24, 28).
wherein the illumination system includes an aperture (34) which is arranged between the light sources (22, 26) and the article (14), which is impermeable for the first kind of light (24) and which has an edge (36) which divides an illumination surface of the illumination system (10) with respect to the first kind of light (24) into a bright region and a dark region (38, 40) and which is permeable for the second kind of light (28) so that both regions (38, 40) appear bright with respect to the second kind of light (28),
wherein the illumination system (10) includes a plurality of first light emitting diodes (22) which emit light (24) of the first kind and a plurality of second light emitting diodes (26) which emit light (28) of the second kind; and
wherein a row of light emitting diodes which includes the first light emitting diodes (22) extends in a plane which is defined by the sensor (16) and the edge (36) of the aperture (34).

## Revendications

1. Dispositif pour l'examen optique d'un objet (14), comprenant
un éclairage (10) pour éclairer une zone d'inspection (12) de l'objet (14), qui comprend une première source de lumière (22) pour l'émission d'un premier type de lumière (24) et une seconde source de lumière (26) pour l'émission d'un second type de lumière (28), ainsi qu'un écran (34) agencé entre les sources de lumière (22, 26) et l'objet (14), lequel est opaque pour le premier type de lumière (24) et comporte une arête (36) laquelle divise une surface éclairée de l'éclairage (10) vis-à-vis du premier type de lumière (24) en une zone claire et une zone sombre (38, 40), et est transparent pour le second type de lumière (28), de sorte que les deux zones (38, 40) apparaissent claires vis-à-vis du second type de lumière (28), et
un capteur (16), sensible pour les deux types de lumière (24, 28), pour détecter l'intensité de la lumière (24, 28), transmise ou réfléchie par l'objet (14), de l'éclairage (10),
dans lequel l'éclairage (10) comprend plusieurs premières diodes électroluminescentes (22) qui émettent de la lumière (24) du premier type, et plusieurs secondes diodes électroluminescentes (26) qui émettent de la lumière (28) du second type, et
dans lequel une rangée de diodes électroluminescentes, qui inclut les premières diodes électroluminescentes (22), s'étend dans un plan qui est défini par le capteur (16) et par l'arête (36) de l'écran (34).

2. Dispositif selon la revendication 1,
**caractérisé en ce que** les premières et les secondes diodes électroluminescentes (22, 26) sont agencées dans une rangée, en particulier en alternance.

3. Dispositif selon la revendication 1,
**caractérisé en ce que** les premières diodes électroluminescentes (22) sont agencées dans une première rangée et les secondes diodes électroluminescentes (26) sont agencées dans une seconde rangée, laquelle s'étend en particulier parallèlement à la première rangée.

4. Dispositif selon la revendication 3,
**caractérisé en ce que** les deux rangées de diodes électroluminescentes (22, 26) sont orientées parallèlement à l'arête (36) de l'écran (34).

5. Dispositif selon l'une des revendications précédentes,
**caractérisé en ce que** l'éclairage (10) comprend un diffuseur (32), dans lequel l'écran (34) est de préférence relié au diffuseur (32), et est en particulier agencé sur celui-ci, sur un côté du diffuseur (32) détourné des sources de lumière (22, 26).

6. Dispositif selon l'une des revendications précédentes,
**caractérisé en ce que** le capteur (16) comprend au moins une ligne d'éléments capteurs (42), laquelle est agencée de préférence parallèlement à l'arête (36) de l'écran (34).

7. Dispositif selon l'une des revendications précédentes,
**caractérisé en ce que** le capteur (16) comprend une ligne d'éléments capteurs (42) qui réagissent aux deux types de lumière (24, 28).

8. Dispositif selon l'une des revendications précédentes,
**caractérisé en ce qu'**il est prévu une commande pour commuter alternativement la première source de lumière (22) et la seconde source de lumière (26) en marche ou à l'arrêt, et pour lire les signaux du capteur (16) de manière synchronisée avec la commutation des sources de lumière (22, 26).

9. Dispositif selon l'une des revendications 1 à 7,
**caractérisé en ce que** la première et la seconde source de lumière (22, 26) sont prévues pour un service continu, le capteur (16) est capable de distinguer le premier type de lumière (24) du second type de lumière (28), et il est prévu une commande pour lire le capteur (16) au choix et en particulier alternativement sur un premier canal correspondant au premier type de lumière (24) et sur un second canal correspondant au second type de lumière (28).

10. Dispositif selon l'une au moins des revendications précédentes,
**caractérisé en ce que** le capteur (16) comprend une première ligne d'éléments capteurs qui réagissent au premier type de lumière, et une seconde ligne d'éléments capteurs qui réagissent au second type de lumière.

11. Dispositif selon l'une au moins des revendications précédentes,
**caractérisé en ce que** la lumière (24) du premier type et la lumière (28) du second type présentent des longueurs d'onde différentes et/ou des polarisations différentes.

12. Procédé pour l'examen optique d'un objet (14), dans lequel
une zone d'inspection (12) de l'objet (14) est éclairée au moyen d'un éclairage (10) qui comprend une première source de lumière (22) pour l'émission d'un premier type de lumière (24), et une seconde source de lumière (26) pour l'émission d'un second type de lumière (28), et l'intensité de la lumière de l'éclairage (10), transmise ou réfléchie par l'objet, est détectée au moyen d'un capteur (16) sensible pour les deux types de lumière (24, 28),
dans lequel l'éclairage (10) comprend un écran (34) agencé entre les sources de lumière (22, 26) et l'objet (14), lequel est opaque pour le premier type de lumière (24) et présente une arête (36) qui divise une surface éclairée de l'éclairage (10) vis-à-vis du premier type de lumière (24) en une zone claire et une zone sombre (38, 40), et qui est transparent pour le second type de lumière (28) de sorte que les deux zones (38, 40) apparaissent claires vis-à-vis du second type de lumière (28),
dans lequel l'éclairage (10) comprend plusieurs premières diodes électroluminescentes (22) qui émettent de la lumière (24) du premier type, et plusieurs secondes diodes électroluminescentes (26) qui émettent de la lumière (28) du second type, et
dans lequel une rangée de diodes électroluminescentes, qui comprend les premières diodes électroluminescentes (22), s'étend dans un plan qui est défini par le capteur (16) et par l'arête (36) de l'écran (34).
